# EUROPEAN PATENT APPLICATION

(11) **EP 0 695 674 A1**
(43) Date of publication of application: **07.02.1996**
(21) Application number: 94309077.9
(22) Date of filing: 06.12.1994
(51) Int. Cl.: B60R 25/00

(54) **Security system for stabiliser legs**

(30) Priority: 06.08.1994 GB 9415969
(71) Applicant: Morris, Carl David, Newton, Powys SY17 5PY (GB)
(72) Inventor: Morris, Carl David, Newton, Powys SY17 5PY (GB)
(74) Representative: Lyons, Andrew John

(57) **Abstract**

A security device for a stabiliser leg of the type that is pivotally mounted on a screw mechanism, whereby rotation of a nut or the like alters the angle of the leg, the device comprising a bracket (102) fitted over the nut or the like leaving same accessible and a cover (104) lockable to the bracket to deny access to the nut or the like.

## Description

This invention concerns a security system for stabiliser legs.

Caravans may be fitted at corners with stabiliser legs which are retractable when the caravan is to be moved. Typically a stabiliser leg is pivotally mounted on a screw mechanism, whereby rotation of a nut or the like alters the angle of the leg between a substantially horizontal position when the caravan is to be moved and a ground contracting position. The angle to which the leg is moved will depend on the level and condition of the ground.

An object of this invention is to provide a security system for such a stabiliser leg, whereby raising of the leg can be prevented.

According to the invention there is provided a security system for a stabiliser leg of the type described above comprising a lockable cover to fit over the nut or the like that is used to cause movement of the leg.

A preferred security system comprises a bracket and a cover lockable to the bracket. The preferred bracket has an aperture that locates over the nut or the like so that it remains accessible. The preferred cover has a recess for receiving the nut or the like. The recess is preferably formed in a plate which is rotatable so that the nut can fit its recess irrespective of its orientation.

The plate is preferably rotatable in one direction only, ie. oppositely to the direction in which the nut would be turned to raise the stabiliser leg. Preferably a ratchet mechanism is provided to permit rotation of the plate in one direction but not the other.

Alternatively, the recess is formed in a fixed plate and is shaped so that the nut can fit into the recess in different axial orientations.

The cover may be locked to the bracket by any suitable locking system. Preferably one or more barrel locks are provided having locking plates that fit through apertures of the bracket for fitting of the cover but which for locking are rotated when the barrels are turned to prevent them being withdrawn through the apertures. Where one lock only is used it is advantageous to have some additional interengagement between the cover and the bracket, such as, for example, a lip of on that locates in a slot of the other. Preferably the lip is on the cover. Alternatively, the cover may be hingedly connected to the bracket.

This invention will now be further described by way of example only, with reference to the accompanying drawings, in which:
Figure 1 shows a caravan stabiliser leg and security means therefor;
Figure 2 shows a bracket of the security means of Figure 1;
Figure 3 is a side view of a cover for the bracket of Figure 2;
Figure 4 is a rear view of the cover of Figure 3;
Figure 5 is a front view of the cover of Figure 4;
Figure 6 shows the cover fitted to the bracket.
Figure 7 shows an alternative form of security means for a caravan stabiliser leg;
Figures 8, 9 and 10 are respectively front, side and rear views of a cover part of the security means of Figure 7;
Figures 11, 12 and 13 are respectively side, front and end views of a bracket part of the security means of Figure 7;
Figure 14 shows another alternative form of security means for a caravan stabiliser leg.

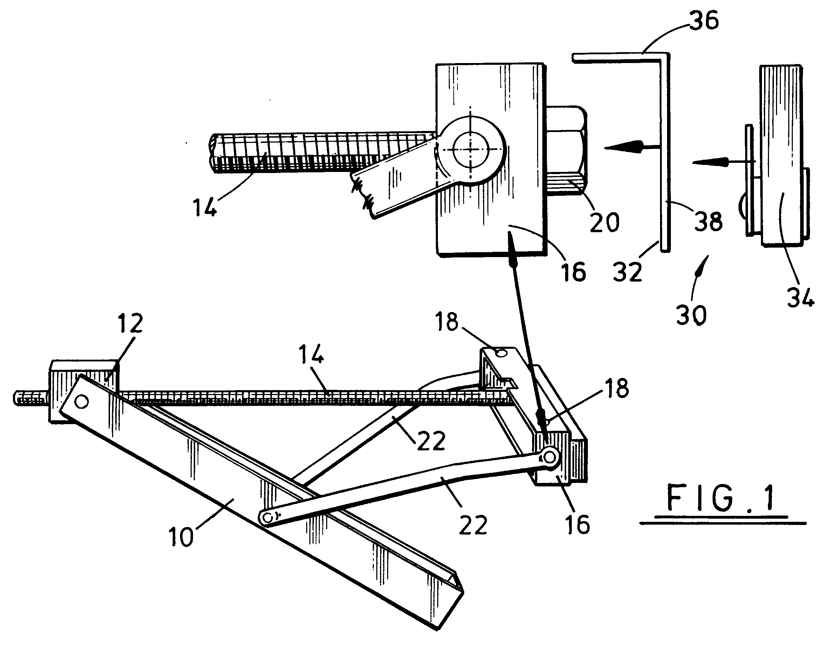

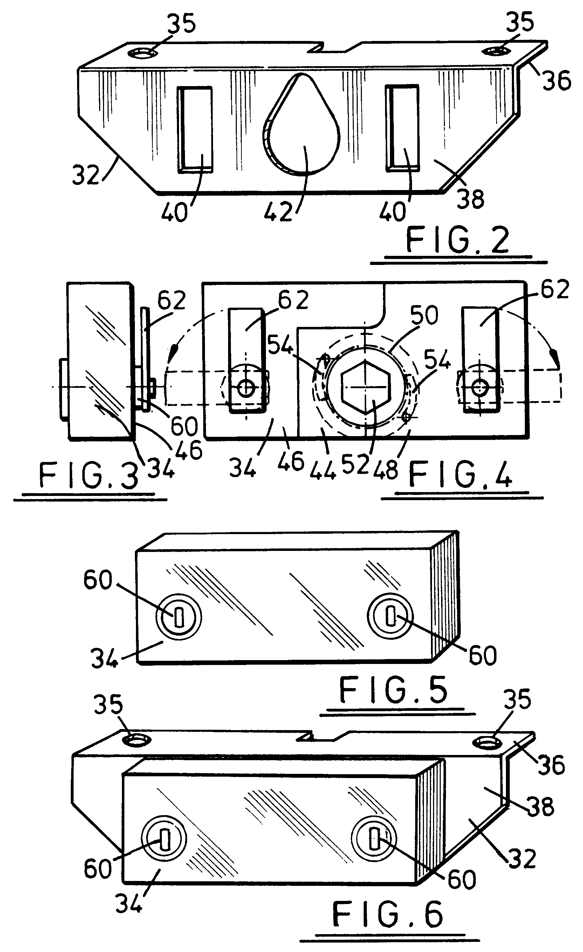

Referring to Figures 1 to 6 of the accompanying drawings, a caravan stabiliser leg 10 is pivotally connected to a block 12. The block 12 is screw threaded through its centre to receive a threaded rod 14 which extends through the block to box-like bracket 16 attached to the underside of the caravan by means of both (not shown) through holes 18 of the bracket. The threaded rod 14 ends with a hexagonal head 20 on the outside of the bracket, whereby rotation of the head using a spanner or the like turn the threaded rod to cause the block to move towards or away from the bracket. The leg 10 is pivotally connected to the bracket from its mid-region by side straps 22 so that as the block moves, the angle of the leg relative to the ground is altered. Thus, the leg can be raised almost horizontally for when the caravan is to be moved and lowered to contact the ground to provide stability when the caravan is sited.

To prevent the caravan being moved without permission, a security cover 30 is provided to fit over the bracket 16 so that access to the head 20 of the threaded rod 14 is denied. The security cover comprises a bracket 32 and a cover 34 therefor. The bracket 32 is a generally L-section bracket 32 which as a first web 36 that is fitted onto the caravan using the same bolts as secure the stabiliser leg bracket 16 to the caravan through holes 35 so as to overlie the bracket 16 and a second web 38 perpendicular to the first web which has three apertures, namely a pair of rectangular apertures 40 one on each side of a central pear shaped aperture 42. When fitted to the caravan, the aperture 42 is intended to fit over the head 20 so that the head is still accessible with a spanner or the like. The first web 36 and the bolt holes 35 are sized and positioned so that when fitted a small gap is provided between the second web and the box bracket 16.

The cover 34 for the bracket 32 is of box section having a generally central cutaway 44 in a rear wall 46 thereof. The cutaway is intended to coincide with the aperture 42 when the cover 34 is fitted to the bracket. On the inner face of wall 48 of the cover 34 facing the aperture 42 is a rotatable plate 50 having a hexagonal shaped aperture 52 therein for receiving the head 20 of the threaded rod 16. The plate is rotatable in one direction only by virtue of a ratchet system, wherein spring loaded pawls 54 are arranged to mesh with teeth of the plate to prevent it from being rotated in a direction which would rotate the threaded rod to raise the stabiliser leg.

The cover is secured to the bracket 32 by means of a pair of barrel locks 60 having rectangular locking plates 62 that fit through the apertures 40 when the cover is fitted onto the bracket (the ability of the plate 50 to rotate in one direction will allow the head 20 to be accommodated in spite of its orientation) and which when the locks are turned by means of keys turn through 90^{o} to retain the cover on the bracket.

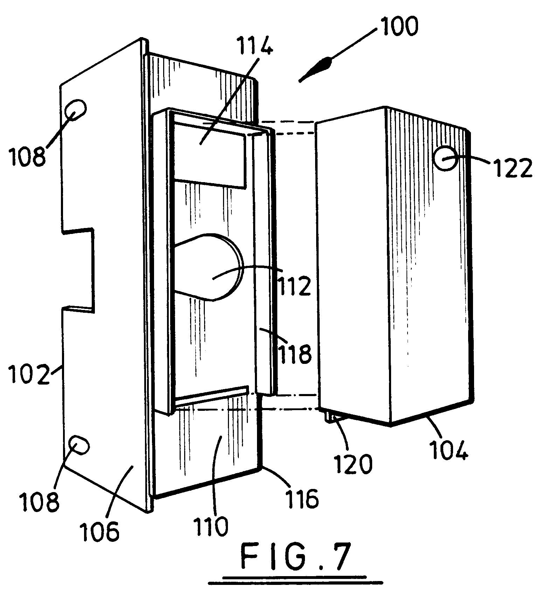

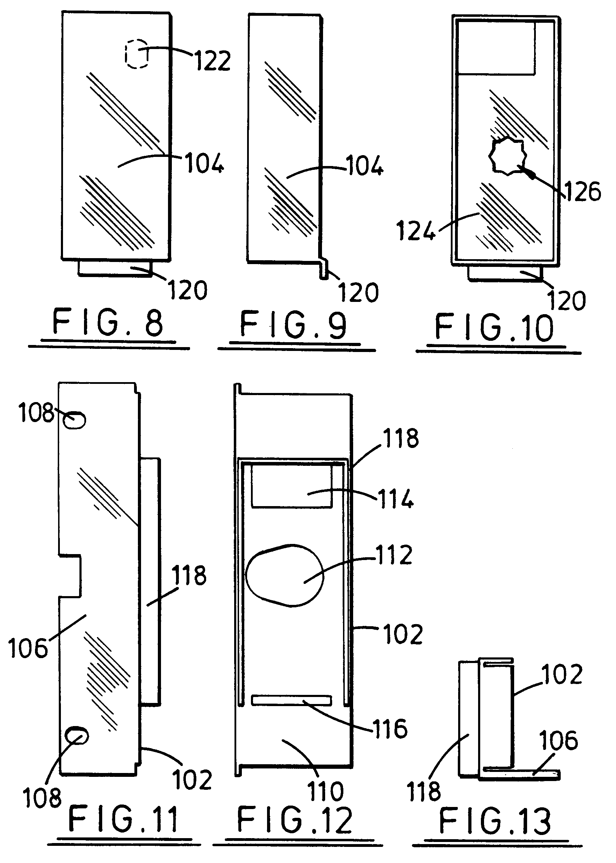

Turning to Figures 7 to 13, a security cover 100 for a caravan stabiliser leg of the type depicted in Figure 1 fits over the bracket 16 of the stabiliser leg so that access to the head 20 of the threaded rod is denied. The security cover 100 comprises a bracket 102 and a cover 104 therefor. The bracket 102 is generally L-shaped and has a first web 106, that is fitted onto the caravan using the same bolts as secure the stabiliser leg bracket 16 through holes 108 in the web 106 so that the web 106 overlies the bracket 16, and a second web 110 at right angles to the first web. The first web 106 and the bolt holes 108 are sized and positioned so that when fitted a small gap is provided between the second web 110 and the bracket 16.

The second web 110 has three apertures formed therein, the first aperture 112 is generally central of the web and is pear-shaped. The apertures 112 is intended to fit over the head 20 of the stabiliser leg so that the head is still accessible with a spanner or the like.

The second aperture 114 is generally rectangular and is provided to receive a locking bar or the like so that cover 104 can be locked to the bracket 102. The third aperture 116 is a slit to receive a part of the cover 104 to locate same on the bracket 102.

The bracket 102 further has an upstand 118 on the face of the second web. The upstand forms three sides of a rectangle the side running being occupied by the slit 116. The upstand 118 is to provide a location for the cover 104.

The cover 104 is of box section having one side open. The cover has at one end a lip 120 which is intended to fit into slit 116 to locate the cover on the bracket and to help retain the cover on the bracket when locked in pace. With the lip 120 in the slit 116, the cover can be pushed into the upstand 118. The cover includes a locking mechanism 122 which has a locking member (not shown) that locates through the aperture 144 in the bracket 102 to lock the cover in place.

Internally of the cover 104 is a plate 124 having an opening or recess 126 formed therein to receive the head 20 of the threaded rod 16. The recess or opening 126 is shaped so that it can receive the hexagonal head 20 in a number of axial positions.

The security cover 100 is fitted and used in a similar way to that of the embodiment of Figures 1 to 6. Th bracket 102 is fitted to a caravan stabiliser leg as a more or less permanent feature. Then when the stabiliser leg has been lowered as desired, the cover 104 is locked in place onto the bracket to prevent the stabiliser leg being raised.

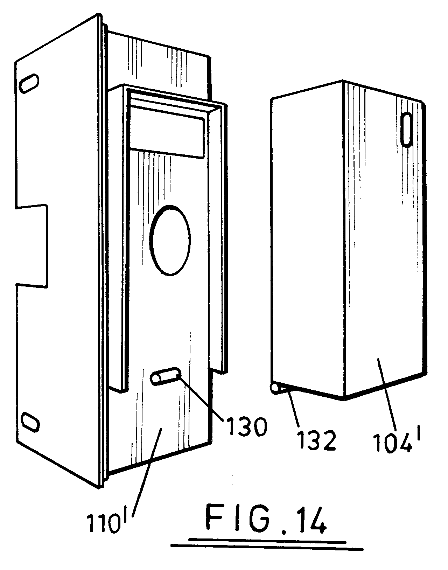

In Figure 14 of the accompanying drawings, there is shown a variation on the embodiment of Figure 7 wherein the cover 104¹ is hingedly connected to the bracket 102. The bracket 102 has a central tubular hinge part 130 on its face 110¹ and the cover 104¹ has two outer tubular hinge parts 132 on a lower edge. The hinge parts 130 and 132 are connected by a pin (not shown) when aligned. In other respects, the security means of Figure 14 is substantially the same as the security means of Figure 7.

## Claims

1. A security device for a stabiliser leg which is pivotally mounted on a screw mechanism, whereby rotation of a nut or the like alters the angle of the leg, the system comprising a lockable cover to fit over the nut or the like.

2. A device as claimed in claim 1, comprising a bracket and cover lockable to the bracket.

3. A device as claimed in claim 1, wherein the bracket has an aperture that locates over the nut or the like so that it remains accessible.

4. A device as claimed in claim 1, 2 or 3 wherein the cover has a recess for receiving the nut or the like.

5. A device as claimed in claim 4, wherein the recess is formed in a plate which is rotatable.

6. A device as claimed in claim 5, wherein the plate is rotatable in one direction only ie. opposite to which the nut or the like would be turned to raise the stabiliser leg.

7. A device as claimed in claim 6, wherein a ratchet mechanism is provided to permit rotation of the plate in one direction only.

8. A device as claimed in claim 4, wherein the recess is formed in a fixed plate and is shaped so as to receive the nut or the like in different axial orientations.

9. A device as claimed in any one of claims 1 to 8, including one or more barrel locks each having a locking plate that fits through an aperture of the bracket for fitting of the cover and is rotated for locking.

10. A device as claimed in claim 9, wherein the cover has one lock and a lip or the like spaced from the lock and locatable through a slot of the bracket.

11. A device as claimed in claim 2, wherein the cover is hingedly connected to the bracket.
